# EUROPÄISCHE PATENTSCHRIFT

(11) **EP 2 366 095 B1**
(45) Veröffentlichungstag und Bekanntmachung des Hinweises auf die Patenterteilung: **03.10.2012**
(21) Anmeldenummer: 09752862.4
(22) Anmeldetag: 20.11.2009
(51) Int. Cl.: G01D 5/347

(54) **OPTOELEKTRONISCHE LAGEMESSEINRICHTUNG UND EBENSOLCHES LAGEMESSVERFAHREN**
OPTOELECTRONIC POSITION MEASUREMENT DEVICE AND POSITION MEASUREMENT METHOD
DISPOSITIF OPTOÉLECTRONIQUE DE MESURE DE POSITION ET PROCÉDÉ CORRESPONDANT DE MESURE DE POSITION

(30) Priorität: 15.12.2008 EP 08171603
(43) Veröffentlichungstag der Anmeldung: 21.09.2011
(73) Patentinhaber: Leica Geosystems AG, 9435 Heerbrugg (CH)
(72) Erfinder: AMANN, Werner, A-6800 Feldkirch (AT)
(74) Vertreter: Gyaja, Christoph Benjamin
(86) Internationale Anmeldenummer: PCT/EP2009/065532
(87) Internationale Veröffentlichungsnummer: WO 2010/072484

(56) Entgegenhaltungen:
- DE-A1-102006 011 540
- GB-A- 2 437 396
- US-A- 5 760 959
- US-A1- 2006 016 970

## Beschreibung

Die Erfindung betrifft eine optoelektronische Lagemesseinrichtung gemäss dem Oberbegriff von Patentanspruch 1 und ein optoelektronisches Lagemessverfahren gemäss dem Oberbegriff von Patentanspruch 12.

Verfahren und Vorrichtungen zur Positionsbestimmung von wenigstens zwei gegeneinander beweglichen Teilsystemen sind seit langem bekannt. Einen gängigen Ansatz stellt die Abbildung eines Codes auf eine detektierende Komponente dar, wobei die Abbildung im Regelfall mit optischen Mitteln, wie z.B. LEDs und/oder Lasern erfolgt. Die Funktion der Positionsbestimmung und insbesondere deren Genauigkeit sind von der Auslegung und Anordnung des Codes wie auch der Abbildungsmittel abhängig.

Das Bestimmen von Richtungen, Winkeln und Längen als Lagen sowie von Distanzen ist in vielen Anwendungsbereichen wie beispielsweise der geodätischen und industriellen Vermessung gefordert. Die Entwicklung in der Lagemesstechnik führen über mechanische Ablesevorgänge bis zur vollautomatisierten Lagemessung nach dem heutigen Stand der Technik.

Bekannte Abtastverfahren sind elektronisch-magnetische, elektronische und optoelektronische Verfahren. Die folgenden Ausführungen beziehen sich auf optoelektronische Abtasteinrichtungen.

Übliche, z. B. aus der DE 83 02 799 U1 bekannte, optoelektronische Lagemesssensoren zum Bestimmen einer Distanz oder eines Winkels um eine Achse weisen einen Codeträger und eine Erfassungseinheit mit einer Vielzahl von lichtempfindlichen Empfangsbereichen zum Empfang eines Teils der optischen Strahlung auf, wobei der Codeträger und die Erfassungseinheit relativ zueinander drehbar sind. Der optische Detektor ist beispielsweise ein Photodetektor. Der Codeträger ist im Allgemeinen als Stab oder Kreisscheibe gegebenenfalls auch als Kreisring ausgebildet und trägt auf einer Seite einen optisch erfassbaren Positionscode, von dem ein Ausschnitt durch eine Beleuchtungseinrichtung auf die Erfassungseinheit abgebildet wird. Im Allgemeinen ist dabei der Codeträger beweglich ausgebildet. Es ist jedoch auch eine Ausführungsform realisierbar, bei der der Codeträger feststeht und sich der Detektor bewegt.

Aus der CH 522 876 ist bekannt, zwischen dem Codeträger und der Erfassungseinheit eine Blende anzuordnen. Es hat sich aber gezeigt, dass derartige Anordnungen ausserordentlich schwierig zu fertigen sind, weil die Erfassungseinheit und die Blende sehr klein sind und zudem genau zueinander justiert werden müssen, damit die gewünschten Strahlungsanteile von der Erfassungseinheit erfasst werden. Hierbei bestehen widersprüchliche Anforderungen an Grösse der Blendenöffnungen bzw. dem Schlitz der Blende, der Breite der Detektorfläche und dem Abstand von Detektor zu Blende. Durch die Blende wird schräg einfallendes Licht abgeschirmt und somit der vom Detektor erfasste Raumwinkel eingeschränkt. Dabei stehen Detektor- oder Pixelbreite und Schlitzbreite sowie Blendenabstand in einem wechselseitigen Verhältnis. Bei einer grossen Detektorbreite muss der Schlitz schmal gehalten oder der Blendenabstand gross gewählt werden, um eine entsprechende Beschränkung des Raumwinkels zu bewirken. Jedoch reduziert eine Verringerung der Schlitzbreite auch die überhaupt zur Verfügung stehende Lichtmenge und eine Vergrösserung des Blendenabstandes vergrössert den Gesamtaufbau.

Hiervon ausgehend liegt der Erfindung die Aufgabe zu Grunde eine verbesserte, insbesondere eine verkleinerte oder die Lichtmenge besser ausnutzende optoelektronische Lagemesseinrichtung und ein ebensolches Lagemessverfahren bereitzustellen.

Eine weitere Aufgabe der Erfindung ist es, eine Lagemesseinrichtung bereitzustellen, die sich leichter herstellen lässt und im Aufbau vereinfacht ist.

Zudem soll die Robustheit der Lagemesseinrichtung erhöht und deren Energieverbrauch reduziert werden.

Diese Aufgaben werden erfindungsgemäss durch die Gegenstände des Anspruchs 1 oder 12 bzw. der abhängigen Ansprüche gelöst oder es werden die Lösungen weitergebildet.

Die optoelektronische Lagemesseinrichtung umfasst einen Codeträger, der einen optisch erfassbaren Positionscode trägt, eine Strahlungsquelle zur Emission von optischer Strahlung auf den Codeträger, eine Erfassungseinheit mit wenigstens einer ersten Sensoreinheit, welche wenigstens einen lichtempfindlichen Empfangsbereich zum Empfang wenigstens eines Teils der Strahlung aufweist, wodurch ein vom Positionscode abhängiges Abtastsignal erzeugbar ist und somit eine Lage des Codeträgers relativ zur Erfassungseinheit erfassbar ist, und ein refraktives optisches Element, das zwischen dem Codeträger und der Erfassungseinheit angeordnet ist, wobei der Codeträger relativ zur Erfassungseinheit mit einem Freiheitsgrad, insbesondere rotatorisch oder translatorisch, beweglich ist.

Erfindungsgemäß weist das optische Element zur Einschränkung des Raumwinkels ein optisches Element mit einem Fokussierungssegment und wenigstens ein Nachbarsegment auf. Hierdurch wird parallel oder unterhalb eines Grenzwinkels zur optischen Achse des Fokussierungssegments einfallende optische Strahlung durch das Fokussierungssegment auf den in der optischen Achse liegenden Empfangsbereich der ersten Sensoreinheit und durch das Nachbarsegment auf ausserhalb der optischen Achse liegende Empfangsbereiche der ersten Sensoreinheit oder eine Stelle neben der ersten Sensoreinheit geführt. Der Grenzwinkel definiert somit den Beginn eines Ablenkwinkelbereichs, der gegebenenfalls auch durch einen zweiten Grenzwinkel wiederum in seiner Funktionalität beschränkt sein kann.

Der Vorteil dieser Anordnung liegt darin, dass keine durch eine Blende erfolgende Einschränkung des erfassten Lichts erfolgt und parallel oder innerhalb des zulässigen Winkelbereichs zur optischen Achse einfallendes Licht fokussiert wird, so dass eine im Vergleich zu einer Blende erhöhte Intensität auf dem Empfangsbereich der ersten Sensoreinheit möglich wird. Licht, das aus einer anderen als der gewünschten Richtung einfällt, wird auf ausserhalb der optischen Achse liegende Empfangsbereiche der ersten Sensoreinheit oder auf eine Stelle neben der ersten Sensoreinheit fokussiert oder abgelenkt, so dass dieser Teil der optischen Strahlung das Messergebnis nicht verfälschend beeinflusst und ggf. für weitere Zwecke, wie z.B. der Intensitäts- bzw. Helligkeitsregelung verwendet werden kann. Im Prinzip kann mit dem optischen Element eine Wirkung erzielt werden, die einer Blende vergleichbar ist, jedoch gegenüber dieser Vorteile aufweist. Zudem kann auch ein zweiter Grenzwinkel vorgesehen sein, bei dessen Überschreiten wiederum durch die Nachbarsegmente Licht auf den zentralen Erfassungsbereich in der optischen Achse geführt wird.

Zudem erlaubt die Verwendung eines solchen refraktiven optischen Elementes eine geringere Bauhöhe als vergleichbare Blendenlösungen, so dass der Abstand zwischen Sensor und Codeträger kleingehalten werden kann, was sowohl Vorteile in Hinblick auf die Miniaturisierung als auch auf die Robustheit der Anordnung bietet.

Durch die fokussierende bzw. strahllenkende Wirkung und die damit erzeugbaren höheren Intensitäten kann die Lichtquelle auch mit niedrigen Leistungen betrieben werden, was einen verringerten Stromverbrauch und eine erhöhte Lebensdauer der Lichtquelle bedeutet.

Hierbei ist es nicht erforderlich, dass ein Empfangsbereich tatsächlich exakt im Fokus eines der Segmente angeordnet ist. Es wird vielmehr die konvergierende Wirkung der Fokussierung ausgenutzt. Ein Empfangsbereich kann auch parallel zur optischen Achse vor oder hinter dem Fokus, d. h. defokussiert, angeordnet sein.

Durch die Verwendung des fokussierenden optischen Elementes mit dem wenigstens einen Nebenbereich wird bewirkt, dass nur parallel oder innerhalb des zulässigen Winkelbereichs zur optischen Achse in das Fokussierungssegment einfallende optische Strahlung die in der optischen Achse liegenden Empfangsbereiche der ersten Sensoreinheit erreicht, so dass auch die Zuverlässigkeit der Erfassung der Projektion verbessert wird.

Das Fokussierungssegment und das Nachbarsegment weisen an der dem Codeträger zugewandten Seite gekrümmte Oberflächen auf, wobei der Krümmungsradius der Oberfläche des Fokussierungssegments von dem Krümmungsradius der Oberfläche des Nachbarsegments abweichen kann. Eine derartige Anordnung ermöglicht eine verbesserte Trennung des einfallenden Lichts. Ausserhalb des Fokussierungssegments einfallende optische Strahlung, die gleichwohl parallel zur optischen Achse sein kann, wird durch das Nachbarsegment fokussiert. Der Fokus des Nachbarsegments sollte dabei bevorzugt nicht mit dem Fokus des Fokussierungssegments zusammenfallen und auch nicht in der gleichen Querebene zur optischen Achse wie der Fokus des Fokussierungssegments liegen.

Vorteilhafte Ausführungsformen und Weiterbildungen der Lagemesseinrichtung sind Gegenstand der abhängigen Ansprüche.

Eine alternative Ausführungsform verwendet anstelle der gekrümmten äusseren Segmente solche mit nach innen geneigten bzw. gekippten planaren Flächen, welche zwar ebenfalls eine ablenkende Wirkung erzielen, jedoch keinen zusätzliche fokussierenden Effekt dieser Bereiche ermöglichen.

Ein derartig ausgebildetes optisches Element verbreitert den Abstand zwischen dem Strahlungsanteil, den man mit den in der optischen Achse liegenden Empfangsbereichen erfassen möchte, und den anderen Strahlungsanteilen, die z. B. in das Nachbarsegment einfallen. Somit wird durch diese Ausführungsform die Zuverlässigkeit der Erfassung nochmals erhöht.

Gemäss einer weiteren bevorzugten Ausführungsform weist das optische Element zwei Nachbarsegmente auf, zwischen denen das mittlere Fokussierungssegment angeordnet ist. Somit kann beidseitig des Fokussierungssegments einfallende optische Strahlung in Richtungen weg von den in der optischen Achse liegenden Empfangsbereichen der ersten Sensoreinheit fokussiert werden.

Das optische Element kann an der Erfassungseinheit befestigt, insbesondere auf diese aufgeklebt oder aufgekittet, sein, so dass das optische Element mit der Erfassungseinheit vorgefertigt werden und als Baugruppe in die Lagemesseinrichtung eingebaut werden kann. Dies erspart bei der Fertigung den zusätzlichen Aufwand für die Ausrichtung und Justierung der einzelnen Elemente und beugt Ausrichtungsfehlern vor. Ferner sind die Sensoreinheiten der Erfassungseinheit besonders klein und empfindlich, so dass durch deren Befestigung am optischen Element bereits ein Schutz gegen Beschädigung der Sensoreinheiten geschaffen wird.

Gemäss einer weiteren bevorzugten Ausführungsform umfasst der Positionscode diffraktive Codeelemente. Der Positionscode kann auch ausschliesslich aus diffraktiven Codeelementen zusammengesetzt sein, wobei sich nebeneinander liegende Codeelemente in ihren Beugungseigenschaften unterscheiden. Vorstellbar ist weiterhin eine Ausbildung des Codeträgers als Hologramm. Durch die diffraktive Struktur der Codeelemente werden Beugungsstrukturen erzeugt, die je nach ausgewählter diffraktiver Struktur unterschiedliche Charakteristika haben. Durch eine geeignete Wahl der diffraktiven Struktur bzw. des Gitters und einer entsprechenden Anordnung der weiteren Komponenten der Lagemesseinrichtung kann erreicht werden, dass der auf der Erfassungseinheit ankommende Anteil der auf das Codeelement fallenden Strahlung reduziert oder verstärkt wird. Damit kann ein Codeelement von einem nicht diese Struktur aufweisenden Codeelement unterschieden werden. Durch diese Identifikation wird der Code in seiner Struktur bzw. Abfolge erkenn- und auswertbar.

Vorzugsweise ist die Sensoreinheit am optischen Element zumindest teilweise asymmetrisch bezüglich der optischen Achse angeordnet. Dies ermöglicht es unter anderem, auch Strahlungsanteile zu erfassen und auszuwerten, die mit einem Winkel zur optischen Achse in das Fokussierungssegment einfallen. Mit einer solchen Anordnung können weiterhin gebeugte Strahlungsanteile eines Maximums oder Minimums n-ter Ordnung mit den in der optischen Achse liegenden Empfangsbereichen der ersten Sensoreinheit erfasst werden.

Weiterhin kann wenigstens eine zweite Sensoreinheit zur Erfassung von Strahlung, z.B. eines durch die diffraktiven Codeelemente erzeugten Maximums oder Minimums vorgesehen sein, wobei die zweite Sensoreinheit parallel zur ersten Sensoreinheit angeordnet ist. Auf diese Weise können zusätzliche Informationen gewonnen werden, die zur Auswertung der Lageinformation oder zur Regelung der Strahlungsintensität verwendet werden können. Weiterhin eignet sich diese Form der Erfassung zur Kalibrierung der Lagemesseinrichtung.

Im Falle eines diffraktiven Codes kann die zweite Sensoreinheit derart angeordnet werden, dass sie ein Maximum erfasst, wenn die erste Sensoreinheit ein Minimum erfasst und umgekehrt. Auf diese Weise erhält man beispielsweise eine Redundanzinformation für den Fall, dass mit den in der optischen Achse liegenden Empfangsbereichen der ersten Sensoreinheit keine oder zu schwache optische Strahlung erfasst wird. In diesem Fall würde mit der zweiten Sensoreinheit dennoch optische Strahlung erfasst werden. Dies erlaubt Rückschlüsse darauf, ob überhaupt optische Strahlung in das optische Element einfällt und wenn ja, von welchem Codeelement bzw. welcher Codeelementart sie gebeugt wurde. Zudem können die durch die zweite Sensoreinheit und ggf. eine dritte Sensoreinheit bereitgestellte Informationen auch in den Auswertungsprozess miteinbezogen werden, z.B. durch Mittelwertbildungen nach Gewichtung der einzelnen Sensorbeiträge.

Hierfür wird in einer anderen Ausführungsform vorgesehen, dass die Erfassungseinheit eine weitere Sensoreinheit zur Erfassung von durch das Nachbarsegment fallender optischer Strahlung aufweist. Die mit dieser Sensoreinheit erfasste optische Strahlung wird zusätzlich in die Lagemessung mit einbezogen und ermöglicht eine höhere Genauigkeit der Lagemessung. Beispielsweise können mit der weiteren Sensoreinheit die gleichen Codeelemente des Positionscodes erfasst werden, die aber aufgrund der Anordnung der weiteren Sensoreinheit mit einer periodischen Verschiebung erfasst werden. Diese periodische Verschiebung kann ausgenutzt werden, um die mit der ersten Sensoreinheit erfasste Lage zu korrigieren. Es ist auch möglich, mit den im Stand der Technik bekannten Verfahren Intensitätsunterschiede zwischen der mit der ersten Sensoreinheit und der mit der weiteren Sensoreinheit erfassten optischen Strahlung auszuwerten und algorithmisch bei der Berechnung der Lage zu berücksichtigen.

Wenigstens eine der Sensoreinheiten umfasst ein lineares oder flächiges Sensorarray. Das Sensorarray ist aus einer Vielzahl von lichtempfindlichen Empfangsbereichen zusammengesetzt. Mit dem linearen Sensorarray kann optische Strahlung in einer Linie erfasst werden - beispielsweise in der optischen Achse. Bei einem flächigen Array sind die Empfangsbereiche in zwei Dimensionen angeordnet und dienen der Erfassung von optischer Strahlung in einer Fläche.

Vorzugsweise ist das flächige Sensorarray derart angeordnet, dass damit durch das Fokussierungssegment und durch das Nachbarsegment fallende optische Strahlung zugleich erfassbar ist. Eine derartige Ausführung erlaubt es, mehrere Sensoreinheiten in einer einzigen zu vereinen. Dadurch wird der Herstellungsaufwand gesenkt und es können die Abstände der auf die Sensoreinheit einfallenden optischen Strahlungsanteile genauer und zuverlässiger erfasst werden. In einer Weiterbildung ist die dem Codeträger zugewandte Oberfläche des oder eines der Nachbarsegmente mit einer Beschichtung versehen. Besonders vorteilhaft ist es, wenn die Beschichtung spektral selektiv bezüglich Transmission oder Reflektion ist. Die Beschichtung kann derart ausgebildet sein, dass die optische Strahlung gefiltert, absorbiert oder reflektiert wird. Auf diese Weise kann durch die direkte Beeinflussung der transmittierten Strahlung zusätzlich eine blendenähnliche Konfiguration geschaffen werden.

Alternativ kann zwischen dem Codeträger und dem optischen Element eine Blende angeordnet sein, die vorzugsweise einen rechteckigen Schlitz aufweist.

Der verfahrensmässige Teil der Aufgabe wird durch ein optoelektronisches Lagemessverfahren zur Bestimmung einer Lage, insbesondere eines Winkels oder einer Länge, mit den Merkmalen von Patentanspruch 12 gelöst. Das Lagemessverfahren umfasst die folgenden Schritte:
- Erzeugen einer von der Lage des Codeträgers abhängigen Projektion eines Teils des Positionscodes, wobei das Erzeugen mindestens ein Emittieren von optischer Strahlung auf den Codeträger umfasst,
- Erfassen der Projektion durch wenigstens eine erste Sensoreinheit der Erfassungseinheit,
- Ableiten der Lage des Codeträgers relativ zur Erfassungseinheit aus der Projektion.

Erfindungsgemäss wird parallel zu einer zwischen Codeträger und erster Sensoreinheit definierten optischen Achse einfallende optische Strahlung auf einen in der optischen Achse liegenden Empfangsbereich der ersten Sensoreinheit fokussiert und nicht parallel zu dieser optischen Achse einfallende optische Strahlung wird auf eine Stelle ausserhalb der optischen Achse abgelenkt. Wird eine erfindungsgemässe Lagemesseinrichtung verwendet, so erfolgt durch das Fokussierungssegment des optischen Elements die Fokussierung auf den wenigstens einen in der optischen Achse liegenden Empfangsbereich der ersten Sensoreinheit. Die Fokussierung bewirkt dabei eine Erhöhung der Strahlungsintensität, wodurch die erfassten Signale zuverlässiger auswertbar werden.

Vorteilhafte Ausführungsformen des Verfahrens gehen aus den abhängigen Ansprüchen hervor.

Bei diffraktiven Codeelementen wird mit der ersten Sensoreinheit oder einer weiteren Sensoreinheit ein durch diese Codeelemente erzeugtes Maximum oder Minimum erfasst. Die Erfassung von ergänzenden Maxima oder Minima ermöglicht es, Kontrollinformationen zu erhalten und - je nach Ausprägung und Anordnung - eine verknüpfte Auswertung vorzunehmen. Weiterhin kann mit der ersten Sensoreinheit oder einer weiteren Sensoreinheit auch bei nicht-diffraktiven Codes durch ein Nachbarsegment fallende optische Strahlung erfasst werden. Auf diese Weise kann zusätzliche Information erhalten werden, die man algorithmisch auswerten kann, um eine Lage mit einer höheren Präzision zu berechnen.

Die Erfindung wird nachfolgend anhand von in den Figuren dargestellten Ausführungsbeispielen rein beispielhaft näher erläutert. Es zeigen:
- Fig.1: eine erfindungsgemäss optoelektronische Lagemesseinrichtung in einer Querschnittsdarstellung im Ausschnitt;
- Fig.2: eine Erfassungseinheit mit einer Blende nach dem Prinzip des Stands der Technik;
- Fig.3: eine erfindungsgemäss Ausbildung der Erfassungseinheit für die Lagemesseinrichtung der Fig.1.
- Fig.4: ein optisches Element mit zwei Segmenten;
- Fig.5: ein optisches Element mit drei Segmenten;
- Fig.6: die Lagemesseinrichtung in einer zweiten Schnittdarstellung;
- Fig.7: das optische Element und eine Erfassungseinheit in einer perspektivischen Darstellung;
- Fig.8: die Lagemesseinrichtung mit einem beschichteten optischen Element;
- Fig.9: die Lagemesseinrichtung mit einer Blende;
- Fig.10a-c: das optische Element und
- Fig. 11: eine weitere erfindungsgemässe optoelektronische Lagemesseinrichtung mit einem optischen Element mit zwei keilförmigen äusseren Segmenten.

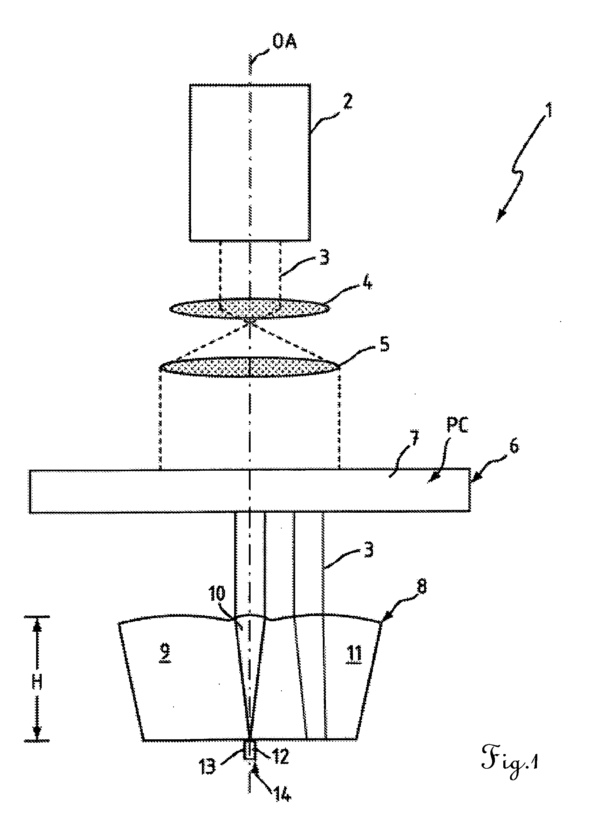

In der Figur 1 ist die Lagemesseinrichtung 1 im Ausschnitt dargestellt. Mit einer optischen Strahlungsquelle 2 in Form eines Lasers, verwendbar sind aber auch andere Quellen genügender räumlicher Kohärenz, z.B. auch eine LED, wird eine optische Strahlung 3 erzeugt. Die optische Strahlung 3 wird durch zwei Linsen 4, 5 kollimiert und auf einen Codeträger 6 geführt, wobei eine Kollimierung jedoch nicht zwingend nötig ist. So kann beispielsweise auch ein geringfügig divergenter Strahl verwendet werden.

Der Codeträger 6 weist einen Positionscode PC mit Codeelementen auf, wobei in dieser Figur nur ein Codeelement 7 eines ersten Typs dargestellt ist, das für optische Strahlung 3 transmissiv ist. Die optische Strahlung 3 trifft danach auf ein refraktives optisches Element 8, das drei Segmente 9-11 aufweist, ein mittleres Fokussierungssegment 10 und in der Bildebene links und rechts davon zwei Nachbarsegmente 9, 11. Durch die Segmente 9-11 wird die optische Strahlung 3 fokussiert. Durch das Fokussierungssegment 10 wird die parallel oder mit einem Einfallswinkel unterhalb eines Grenzwinkels α zur optischen Achse OA des Fokussierungssegments 10 einfallende optische Strahlung 3 auf wenigstens einen in der optischen Achse OA liegenden Empfangsbereich 12 einer ersten Sensoreinheit 13 der Erfassungseinheit 14 fokussiert oder gelenkt. In der Darstellung ist die Erfassungseinheit 14 durch nur eine Sensoreinheit 13 mit einem einzeiligen Sensorarray gebildet.

Die Nachbarsegmente 9, 11 des optischen Elements 8 sind ebenfalls so ausgebildet, dass parallel zur optischen Achse OA einfallende optische Strahlung 3 fokussiert wird. Diese wird jedoch nicht auf den in der optischen Achse OA liegenden Empfangsbereich 12 der ersten Sensoreinheit 13 fokussiert oder gelenkt, so dass die Strahlung auf einen Bereich ausserhalb des Empfangsbereichs 12 abgelenkt wird.

Das optische Element 8 ist auf die erste Sensoreinheit 13 aufgekittet, kann jedoch auch beispielsweise durch eine Schnapp- oder Klemmverbindung gehalten werden. Zudem kann auch zwischen dem optischem Element 8 und der ersten Sensoreinheit 13 eine Aufnahme mit einer Immersionsflüssigkeit angeordnet sein.

Damit sich der in der optischen Achse OA liegende Empfangsbereich 12 der ersten Sensoreinheit 13 im Fokus des Fokussierungssegments 10 befindet, ist das optische Element 8 als Distanzelement ausgebildet und weist eine erforderliche Höhe H auf.

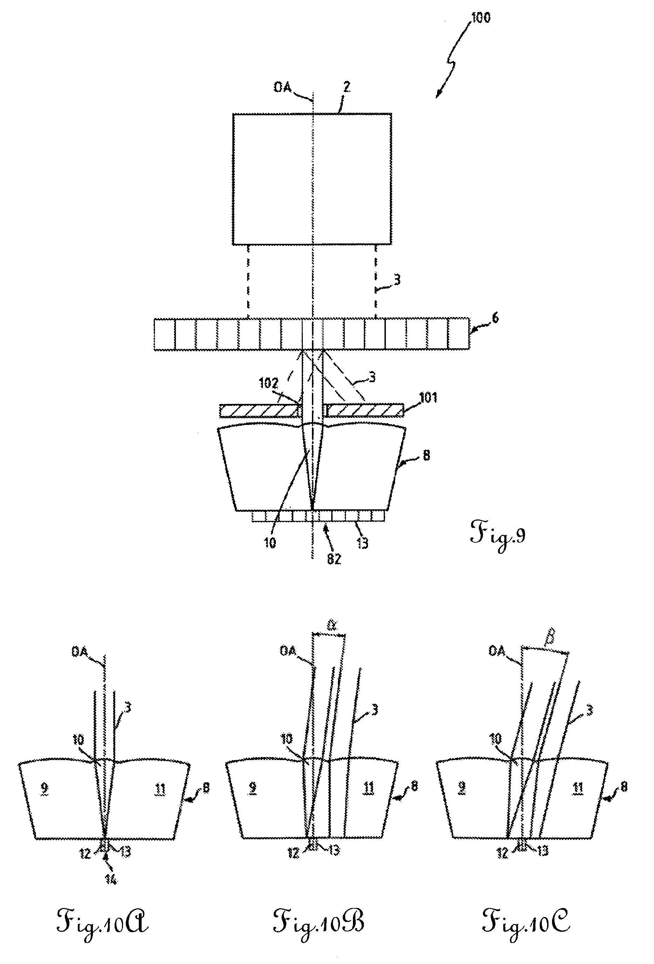

Der Effekt des optischen Elements 8 ist, dass die durch das Fokussierungssegment 10 fokussierte optische Strahlung 3 mit einer erhöhten Intensität auf den in der optischen Achse OA liegenden Empfangsbereich 12 der ersten Sensoreinheit 13 der Erfassungseinheit 14 auftrifft und daher das Vorhandensein von optischer Strahlung 3 mit der ersten Sensoreinheit 13 zuverlässiger erfassbar ist. Ein weiterer Vorteil ist, dass optische Strahlung 3, die ausserhalb des Fokussierungssegments 10 oder mit einem Einfallswinkel oberhalb des Grenzwinkels α (vgl. Fig. 10b und 10c) und damit in einem Ablenkwinkelbereich auf das optische Element 8 auftrifft, nicht auf den in der optischen Achse OA liegenden Empfangsbereich 12 fokussiert oder gelenkt wird und somit die Erfassung nicht beeinflusst. Je nach Ausbildung des Codeträgers 6 und den optischen Bedingungen kann der Empfangsbereich 12 auch versetzt bzw. asymmetrisch gegenüber der optischen Achse OA angeordnet sein.

Allgemein gilt hierbei für diese Figur und die weiteren gezeigten Beispiele, dass der Aufbau in der Zeichnungsebene symmetrisch bezüglich der optischen Achse ausgeführt ist. Das heisst, dass ein Einfallswinkel des schief einfallenden Lichtes auch negativ sein kann. Senkrecht zur Zeichnungsebene ist der Aufbau hingegen winkelunabhängig.

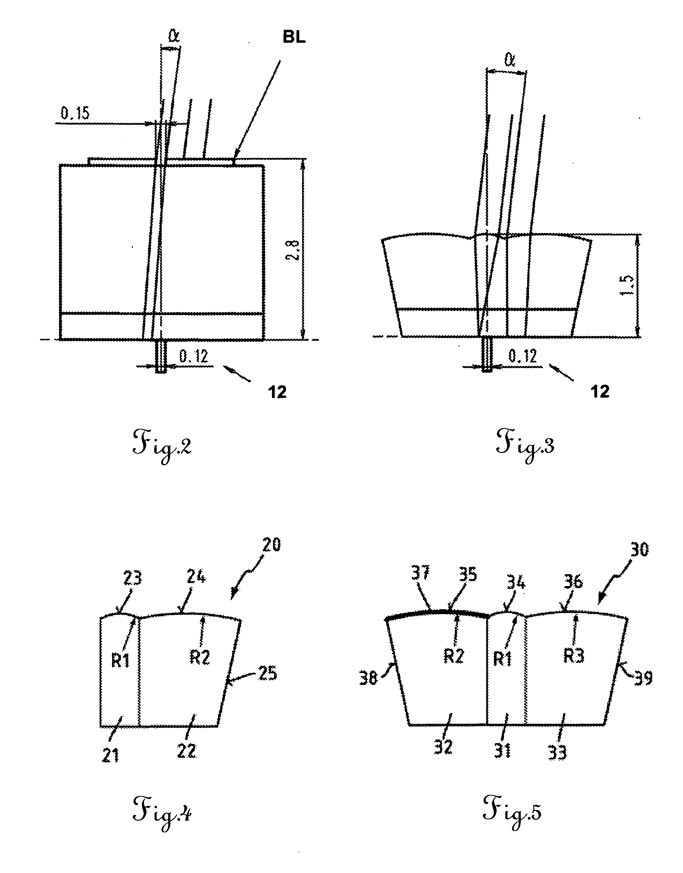

Figur 2 zeigt eine Erfassungseinheit mit einer Blende BL nach dem Prinzip des Stands der Technik. Um bei einer Breite des Empfangsbereichs 12 von 0,12 mm eine ausreichende Einschränkung des Raumwinkels bei genügend hohen Intensitäten erreichen zu können, muss eine Blende BL mit einer Öffnung von 0,15 mm in einem Abstand von 2,8 mm über dem Erfassungsbereich 12 positioniert werden. Der Winkel α bezeichnet hierbei den Winkel des schief einfallenden Lichtes.

Im Vergleich zu diesem Ansatz erlaubt die in Figur 3 dargestellte erfindungsgemässe Ausbildung der Erfassungseinheit für die Lagemesseinrichtung eine geringere Bauhöhe und höhere Intensitäten. Für eine identische Breite des Erfassungsbereichs 12 von 0,12 mm kann ein optisches Element mit einer Höhe von nur 1,5 mm verwendet werden, dass zudem eine gegenüber der konventionellen Blendenlösung aus Figur 2 höhere Intensität im Empfangsbereich 12 aufweist. Hierbei kann die freie Öffnung der mittleren Linse mit 0,5 mm so gewählt werden, dass ca. dreimal mehr Licht genutzt wird als bei einer vergleichbaren Blendenlösung mit einer entsprechenden freien Öffnung von 0,15 mm.

In der Figur 4 ist ein optisches Element 20 mit zwei Segmenten 21, 22 dargestellt. In der Bildebene links befindet sich ein Fokussierungssegment 21, das an einer im Einbauzustand dem Codeträger 6 (vgl. Fig. 1) zugewandten Oberfläche 23 eine Krümmung mit einem Radius R1 aufweist. Das in der Bildebene rechts davon angeordnete Nachbarsegment 22 weist ebenfalls an der dem Codeträger 6 zugewandten Oberfläche 24 eine Krümmung auf, diesmal mit dem Radius R2. Der Krümmungsradius R2 ist grösser als der Krümmungsradius R1. An einer seitlichen Aussenseite 25 ist das Nachbarsegment 22 abgeschrägt.

In Figur 5 ist ein weiteres optisches Element 30 dargestellt, das ein mittleres Fokussierungssegment 31 und in der Bildebene links und rechts davon jeweils ein Nachbarsegment 32, 33 aufweist. Jedes Segment 31-33 weist eine Oberfläche 34-36 mit einem Krümmungsradius R1-R3 auf. Der Krümmungsradius R1 des Fokussierungssegments 31 ist dabei kleiner als der Krümmungsradius R2 und der Krümmungsradius R3 der Nachbarsegmente 32, 33. In der Figur 3 sind die Krümmungsradien R2 und R3 gleich gross. Abhängig von der konkreten Anwendung können die Krümmungsradien R2 und R3 aber auch unterschiedlich gross sein. Das in der Bildebene linke Nachbarsegment 32 ist mit einer Beschichtung 37 versehen, die spektral selektiv bezüglich Transmission ist. An den Aussenseiten 38, 39 sind die Nachbarsegmente 32, 33 abgeschrägt.

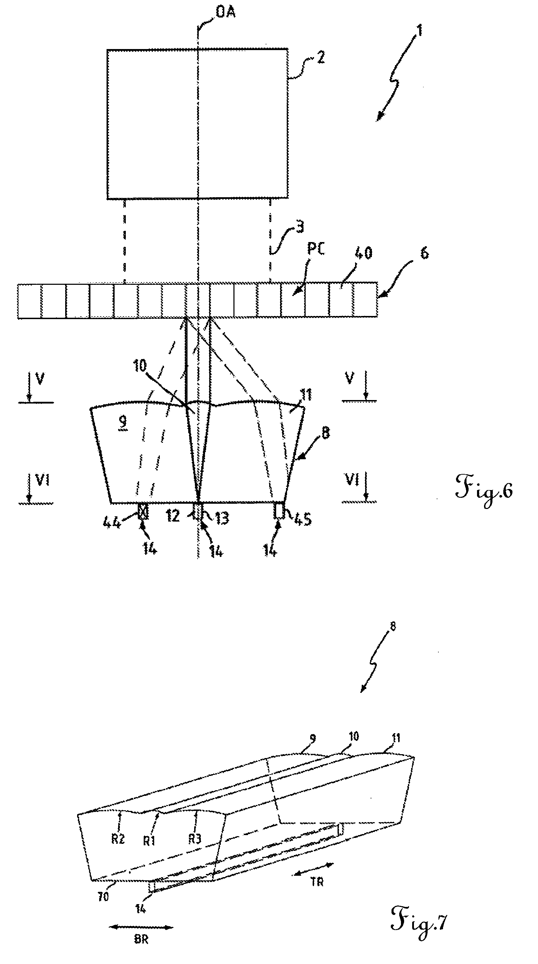

In der Figur 6 ist die Lagemesseinrichtung 1 in einer weiteren Schnittdarstellung gezeigt. Die Strahlungsquelle 2 emittiert optische Strahlung 3, die parallel zur optischen Achse OA des Fokussierungssegments 10 kollimiert ist und auf den Codeträger 6 auftrifft. In der Figur 4 ist der Codeträger 6 mit einem Positionscode PC mit Codeelementen 40 eines zweiten Typs dargestellt. Die Codeelemente 40 des zweiten Typs weisen eine diffraktive Struktur auf, durch welche die einfallende Strahlung 3 gebeugt wird. Durch die Codeelemente 40 wird ein Beugungsmuster mit Maxima und Minima erzeugt. Befindet sich beispielsweise in der optischen Achse OA ein Minimum so schliessen sich nach aussen Maxima und Minima an, die je nach Positionierung von weiteren Sensoreinheiten 44, 45 detektiert werden können. Auf diese Weise erfassen die Empfangsbereiche 12 der ersten Sensoreinheit 13, die in der optischen Achse OA liegen, kein Licht oder Licht von zu schwacher Intensität. Damit wird ein Kontrast zwischen den Codeelementen 7 des ersten Typs (vergleiche Figur 1) und den Codeelementen 40 des zweiten Typs erzeugt, der zur Erfassung einer Lage bzw. einer Lageänderung ausgewertet werden kann.

Neben der ersten Sensoreinheit 13 sind parallel dazu zwei weitere Sensoreinheiten 44, 45 am optischen Element 8 angeordnet. Diese Sensoreinheiten 44, 45 erfassen Licht, das durch die Nachbarsegmente 9, 11 fällt. Hierbei können die zweite und dritte Sensoreinheit 44, 45 parallel oder schräg versetzt zur ersten Sensoreinheit 13 angeordnet sein. In dieser Anordnung erfasst beispielsweise die linke Sensoreinheit 44 ein Maximum 43, während die rechte Sensoreinheit 45 ein Minimum 42 erfasst. Die dargestellten Strahlgänge sind hierbei rein schematisch zu verstehen und geben nicht unbedingt die tatsächlichen Grössen- und Winkelverhältnisse wieder.

In der Figur 7 ist das optische Element 8 in einer perspektivischen Darstellung gezeigt. Das optische Element 8 weist, wie auch in den Figuren 1 und 5 gezeigt, drei Segmente 9-11 auf: ein mittleres Fokussierungssegment 10 und zwei daneben liegende Nachbarsegmente 9, 11. Das optische Element 8 weist in der Tiefenrichtung TR eine gleich bleibende Querschnittsform auf. Erfindungsgemäss kann aber das optische Element auch rotationssymmetrisch ausgebildet werden. Das optische Element 8 dient auch als Distanzkörper für die an der Unterseite 70 befestigte Erfassungseinheit 14. Diese Erfassungseinheit 14 ist in diesem Beispiel als lineares Sensorarray ausgebildet und an der Unterseite 70 des optischen Elements 8 befestigt. Je nach Anwendungsbereich kann die Erfassungseinheit 14 jedoch auch als Flächensensor ausgebildet sein. Hier ist das optische Element 8 auf die Erfassungseinheit 14 aufgeklebt.

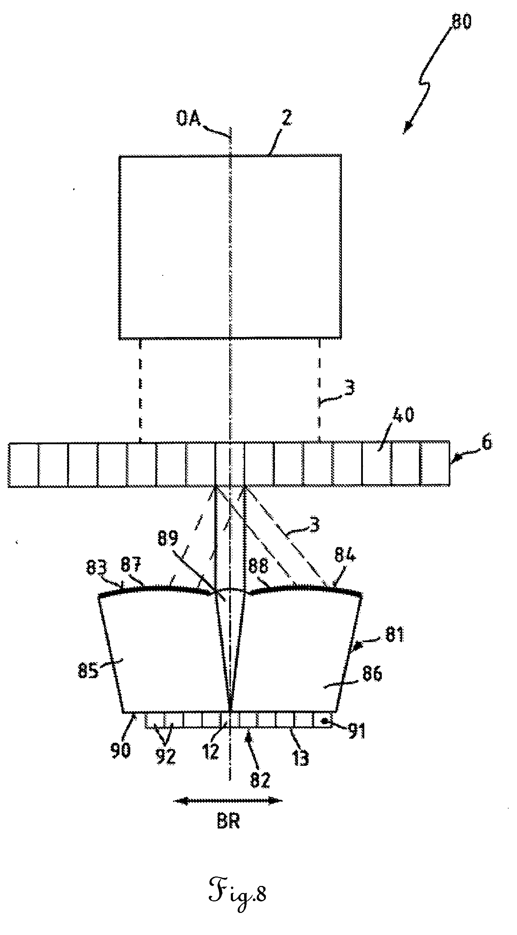

In der Figur 8 ist eine Ausführungsform der Lagemesseinrichtung 80 dargestellt, die von Figur 6 abgeleitet ist. Gleiche Merkmale dieser Lagemesseinrichtung 80 sind deshalb mit identischen Bezugszeichen versehen. Die Ausführungsform der Figur 8 unterscheidet sich von der in Figur 6 dargestellten Ausführungsform durch das optische Element 81 und durch die Erfassungseinheit 82, die nunmehr mehrere Empfangsbereiche 92 aufweist. Bei dieser Ausführungsform ist auf die gekrümmten Oberflächen 83, 84 der Nachbarsegmente 85, 86 des optischen Elements 81 jeweils eine Beschichtung 87, 88 aufgebracht. Die Beschichtung 87, 88 absorbiert optische Strahlung 3, z.B. spektral selektiv. Auf diese Weise kann optische Strahlung 3 nur noch in das Fokussierungssegment 89 einfallen und auf die Erfassungseinheit 82 fokussiert werden. Auf der Unterseite 90 des optischen Elements 81 ist ein flächiges Sensorarray 91 angebracht, das eine Vielzahl von weiteren Empfangsbereichen 92 aufweist, die sich in der Breitenrichtung BR und der Tiefenrichtung TR (vgl. Fig. 7) erstrecken. Während auf die in der optischen Achse OA liegenden Empfangsbereiche 12 einfallende optische Strahlung gelenkt wird, erfolgt keine Ausleuchtung der Vielzahl von weiteren Empfangsbereichen 92 durch den Strahlgang des mittleren Fokussierungssegments 10. Diese weiteren Empfangsbereichen 92 können jedoch durch die Nachbarsegmente 9, 11 beleuchtet werden, wie dies beispielsweise in Figur 6 erläutert wird, aufgrund der Beschichtung 87, 88 jedoch beispielsweise spektral selektiv. Das flächige Sensorarray 91 kann hierfür zudem asymmetrisch bezüglich der optischen Achse OA am optischen Element 81 befestigt werden.

In Figur 9 ist eine weitere Lagemesseinrichtung 100 ausschnittsweise dargestellt. Diese Ausführungsform stellt eine Alternative zu der in Figur 8 dargestellten Lagemesseinrichtung 80 dar. Statt die Nachbarsegmente 85, 86 des optischen Elements 81 zu beschichten, ist bei dieser Ausführungsform eine zusätzliche Blende 101 zwischen dem Codeträger 6 und dem optischen Element 8 angeordnet, welche die Aufgabe hat, einfallende optische Strahlung 3 abzuschatten, die ausserhalb des Fokussierungssegments 10 auf das optische Element 8 auftreffen würde. Die Blende 101 weist dabei einen rechteckigen Schlitz 102 auf.

In den Figuren 10a bis 10c ist dargestellt, wie die Richtung der in das optische Element 8 einfallenden optischen Strahlung 3 durch die einzelnen Segmente 9₋11 geändert wird. In Figur 10a trifft die optische Strahlung 3 parallel und damit mit einem Einfallswinkel unterhalb eines Grenzwinkels α zur optischen Achse OA auf das optische Element 8 auf. In Figur 10b weist die optische Strahlung 3 als Einfallswinkel den Grenzwinkel α auf. In Figur 10c ist der Einfallswinkel β der optischen Strahlung 3 grösser als der Grenzwinkel α in Figur 10b. Wie man in Figur 10a gut erkennen kann, wird die in das Fokussierungssegment 10 einfallende optische Strahlung 3 auf einen oder ggf. auch mehrere in der optischen Achse OA liegende Empfangsbereiche 12 einer ersten Sensoreinheit 13 der Erfassungseinheit 14 fokussiert.

Aus Figur 10b geht hervor, dass unter dem Grenzwinkel α auf das Fokussierungssegment 10 auftreffende optische Strahlung 3 nicht mehr auf den in der optischen Achse OA liegenden Empfangsbereich 12 fokussiert bzw. gelenkt wird. Auch die in das Nachbarsegment 11 einfallende optische Strahlung 3 wird durch das optische Element 8 gebrochen und in einer entgegen gesetzten Richtung abgelenkt, so dass auch dieser Teil der optischen Strahlung 3 nicht auf den in der optischen Achse OA liegenden Empfangsbereich 12 trifft. Bei einem grösseren Einfallswinkel β der optischen Strahlung 3 zeigt sich ein ähnliches Bild, wie man in Figur 10c sehen kann: In das Fokussierungssegment 10 einfallende Strahlung 3 wird auf eine Stelle links neben der Sensoreinheit 13 fokussiert. Durch das Nachbarsegment 11 einfallende optische Strahlung 3 erreicht die Sensoreinheit 13 ebenfalls nicht. Im Vergleich der Figuren 10c und 10b ist bei einem Einfallswinkel β der Abstand zwischen der aus dem Nachbarsegment 11 austretenden optischen Strahlung 3 und dem Empfangsbereich 12 der Sensoreinheit 13 geringer.

Während es erfindungsgemäss angestrebt werden kann, jegliche einfallende Strahlung mit Einfallswinkeln oberhalb des Grenzwinkels α abzulenken, muss diese Forderung jedoch nicht in allen Fällen erfüllt werden, da entweder die entsprechenden Einfallswinkel nicht erst auftreten oder aber die Intensität der unter diesen winkeln einfallenden Strahlung vernachlässigbar gering sind. Deshalb genügt es zumeist, wenn der Ablenkwinkelbereich nicht alle Winkel oberhalb des Grenzwinkels α erfasst, sondern lediglich die sichere Ablenkwirkung bis zum zweiten Grenzwinkel β sicherstellt. Allerdings kann es jedoch auch in speziellen Anwendungen interessant sein, auch Strahlungsanteile aus diesem speziellen Winkelbereich zu erfassen.

Aus optischen Gründen sind die Linsen in den dargestellten Beispielen so ausgelegt, dass Licht mit einem Einfallswinkel zwischen dem Grenzwinkel α und einem zweiten Grenzwinkel β nicht auf den Empfangsbereich 12 in der OA gelangt. Paralleles Licht und Licht mit kleinem Winkel, d.h. Einfallswinkel < Grenzwinkel α, trifft hingegen durch die mittlere Linse auf den in der optischen Achse OA liegenden Empfangsbereich 12. In dem konkret dargestellten Beispiel wird unter grossem Winkel einfallendes Licht, d.h. ausserhalb des Ablenkwinkelbereichs mit Einfallswinkel > zweiter Grenzwinkel β, durch die äusseren Linsen wiederum auf den Empfangsbereich 12 geführt. Somit wird durch das optische Element 8 für den Empfang ein Winkelbereich für die einfallende Strahlung als Ablenkwinkelbereich ausgeschnitten, d.h. innerhalb dieses Winkelbereichs einfallendes Licht erreicht nicht den Empfangsbereich 12. Dabei kann die Anordnung, z.B. durch eine die möglichen Winkel einschränkende Blende oder eine entsprechende Gestaltung der Oberflächenkrümmung der Nachbarsegmente 9 oder 11, jedoch auch so ausgelegt werden, dass bei Einfallswinkeln > Grenzwinkel α ein Empfang überhaupt ausgeschlossen wird.

Bei diffraktiven Kreisteilungen bzw. Codes erlaubt jedoch die Verwendung von Ablenkwinkelbereichen mit einem unteren und einem oberen Grenzwinkel, d.h. den Grenzwinkeln α und β, eine technisch einfache Auslegung. Dies ist deshalb möglich, da in diesen diffraktiven Anwendungsfällen zumeist fast kein Licht mit Einfallswinkeln grösser β auftritt. Beim diffraktiven Kreis, für den dieses optische Element primär ausgelegt ist, müssen die höheren Beugungsordnungen ausgeblendet werden. Die geraden (nullte, zweite, ..) Beugungsordnungen liefern ohnehin kein Licht und bei den ungeraden ist nur in der ersten und dritten Beugungsordnung Licht vorhanden. Alle höheren, d.h. ab der dritten Beugungsordnung, Ordnungen tragen praktisch fast keine Strahlungsanteile mehr bei. Da die Optik einfach mit einem zweiten Grenzwinkel β so ausgelegt werden kann, dass die erste und dritte Beugungsordnung einen Winkel zwischen α und β besitzen, werden sie aus dem Empfangsbereich 12 abgelenkt. Insofern ist vorwiegend der untere Grenzwinkel α für die erfindungsgemässe Funktionalität relevant, solange der Ablenkwinkelbereich nur gross genug ist, um auch noch die dritte Beugungsordnung sicher abzulenken.

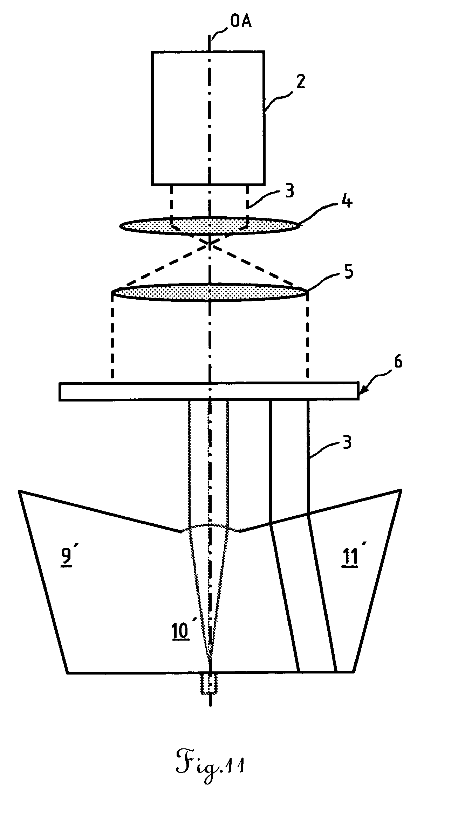

Fig. 11 zeigt eine weitere erfindungsgemässe optoelektronische Lagemesseinrichtung mit einem optischen Element mit zwei keilförmigen äusseren Segmenten. Der Aufbau entspricht hierbei in der Anordnung der Komponenten und dem Strahlgang der in Fig.1 dargestellten Lagemesseinrichtung. Allerdings ist das optische Element abweichend ausgestaltet, wobei das Fokussierungssegment 10' an der dem Codeträger 6 zugewandten Seite eine gekrümmte Oberfläche aufweist und das Nachbarsegment 9',11' an der dem Codeträger 6 zugewandten Seite eine keil- oder prismenförmig nach aussen ansteigende Oberfläche aufweist. Diese Anordnung entspricht dabei der Anordnung in Fig.1, wobei die äusseren Segmente mit nach aussen ansteigender planarer Oberfläche ausgebildet sind. Damit weisen die optischen Durchtrittsflächen der Keile bzw. Prismen zur optischen Achse OA bzw. ist die durch diese Flächen definierte Ebene zur optischen Achse OA hin geneigt. Damit wirken diese Keilsegmente aufgrund der Orientierung ihrer ebenen Fläche ebenfalls nach aussen ablenkend, wobei allerdings keine zusätzliche fokussierende Wirkung auftritt. In beiden Fällen wird durch die gegenüber der optischen Achse OA geneigte Ausgestaltung bzw. Orientierung des Auftreffbereichs der abzulenkenden Strahlung eine solch ablenkende Wirkung erzielt. Dabei wird im Falle der gekrümmten Oberfläche der Neigungswinkel kontinuierlich variiert, wohingegen im planaren Fall der Neigungswinkel der Fläche gegenüber der optischen Achse OA in allen Punkten der Fläche gleich bleibt.

Die Merkmale der verschiedenen dargestellten Ausführungsformen sind in der jeweiligen Zuordnung beispielhaft angegeben und können auch mit anderen Ausführungsformen kombiniert werden. So kann bspw. die zusätzliche Blende oder die Immersionsflüssigkeit in allen Ausführungsformen und neben der ersten Sensoreinheit auch für die weiteren Sensoreinheiten verwendet werden. Auch ist neben diffraktiven Codes die Verwendung verschiedener anderer Codevarianten, z.B. mit reiner Abschattungswirkung, für alle Ausführungsformen gleichermassen möglich. Schliesslich kann erfindungsgemäss in allen Ausführungsformen auch ein optisches Element mit nur zwei oder mehr als drei Nachbarsegmenten erfindungsgemäss eingesetzt werden. Die dargestellten Ausführungsformen sind demgemäss als rein beispielhaft zu verstehen.

## Patentansprüche

1. Optoelektronische Lagemesseinrichtung, umfassend
• einen Codeträger (6), der einen optisch erfassbaren Positionscode (PC) trägt,
• eine Strahlungsquelle (2) zur Emission von optischer Strahlung (3) auf den Codeträger (6),
• eine Erfassungseinheit (14, 82) mit wenigstens einer ersten Sensoreinheit (13), welche wenigstens einen lichtempfindlichen Empfangsbereich (12) zum Empfang wenigstens eines Teiles der Strahlung (3) aufweist, wodurch ein vom Positionscode (PC) abhängiges Abtastsignal erzeugbar ist und somit eine Lage des Codeträgers (6) relativ zur ersten Sensoreinheit (13) erfassbar ist, und
• ein refraktives optisches Element (8, 20, 30, 81), das zwischen dem Codeträger (6) und der ersten Sensoreinheit (13) angeordnet ist und ein Fokussierungssegment (10, 21, 31, 89) und wenigstens ein Nachbarsegment (9, 11, 22, 32, 33, 85, 86) aufweist, wobei
- durch das Fokussierungssegment (10, 21, 31, 89) parallel oder mit einem Einfallswinkel unterhalb eines Grenzwinkels α zur optischen Achse (OA) des Fokussierungssegments (10, 21, 31, 89) in das Fokussierungssegment (10, 21, 31, 89) einfallende Strahlung (3) auf den in der optischen Achse (OA) liegenden Empfangsbereich (12) der ersten Sensoreinheit (13) lenkbar ist und
- durch das Fokussierungssegment (10, 21, 31, 89) und das Nachbarsegment (9, 11, 22, 32, 33, 85, 86) mit einem Einfallswinkel in einem Ablenkwinkelbereich oberhalb des Grenzwinkels α zur optischen Achse (OA) einfallende Strahlung auf eine Stelle ausserhalb der optischen Achse ablenkbar ist,
wobei der Codeträger (6) relativ zur ersten Sensoreinheit (13) mit einem Freiheitsgrad, insbesondere rotatorisch oder translatorisch, beweglich ist, **dadurch gekennzeichnet, dass**
das Fokussierungssegment (10, 21, 31, 89) und das Nachbarsegment (9, 11, 22, 32, 33, 85, 86) an der dem Codeträger (6) zugewandten Seite gekrümmte Oberflächen (23, 24, 34-36, 83, 84) aufweisen, wobei der Krümmungsradius (R1) der Oberfläche (23, 34) des Fokussierungssegments (10, 21, 31, 89) von dem Krümmungsradius (R2, R3) der Oberfläche (24, 35, 36) des wenigstens einen Nachbarsegments (9, 11, 22, 32, 33, 85, 86) abweicht.

2. Lagemesseinrichtung nach Anspruch 1,
**dadurch gekennzeichnet, dass**
das optische Element (8, 30, 81) zwei Nachbarsegmente (9, 11, 9', 11', 32, 33, 85, 86) aufweist, zwischen denen das mittlere Fokussierungssegment (10, 10', 31, 89) angeordnet ist.

3. Optoelektronische Lagemesseinrichtung, umfassend
• einen Codeträger (6), der einen optisch erfassbaren Positionscode (PC) trägt,
• eine Strahlungsquelle (2) zur Emission von optischer Strahlung (3) auf den Codeträger (6),
• eine Erfassungseinheit (14) mit wenigstens einer ersten Sensoreinheit (13), welche wenigstens einen lichtempfindlichen Empfangsbereich (12) zum Empfang wenigstens eines Teiles der Strahlung (3) aufweist, wodurch ein vom Positionscode (PC) abhängiges Abtastsignal erzeugbar ist und somit eine Lage des Codeträgers (6) relativ zur ersten Sensoreinheit (13) erfassbar ist, und
• ein refraktives optisches Element, das zwischen dem Codeträger (6) und der ersten Sensoreinheit (13) angeordnet ist und ein Fokussierungssegment (10') und zwei Nachbarsegmente (9', 11') aufweist, zwischen denen das mittlere Fokussierungssegment (10') angeordnet ist , wobei
- durch das Fokussierungssegment (10') parallel oder mit einem Einfallswinkel unterhalb eines Grenzwinkels α zur optischen Achse (OA) des Fokussierungssegments (10') in das Fokussierungssegment (10') einfallende Strahlung (3) auf den in der optischen Achse (OA) liegenden Empfangsbereich (12) der ersten Sensoreinheit (13) lenkbar ist und
- durch das Fokussierungssegment (10') und die Nachbarsegmente (9' , 11' ) mit einem Einfallswinkel in einem Ablenkwinkelbereich oberhalb des Grenzwinkels α zur optischen Achse (OA) einfallende Strahlung auf eine Stelle ausserhalb der optischen Achse ablenkbar ist,
wobei der Codeträger (6) relativ zur ersten Sensoreinheit (13) mit einem Freiheitsgrad, insbesondere rotatorisch oder translatorisch, beweglich ist,
**dadurch gekennzeichnet, dass**
das Fokussierungssegment (10') an der dem Codeträger (6) zugewandten Seite eine gekrümmte Oberfläche aufweist und die Nachbarsegmente (9' , 11') an der dem Codeträger (6) zugewandten Seite nach aussen ansteigende planare Oberflächen aufweisen, sodass die Oberflächen zur optischen Achse hin geneigt sind.

4. Lagemesseinrichtung nach einem der vorangehenden Ansprüche,
**dadurch gekennzeichnet, dass**
das optische Element (8, 81) an der ersten Sensoreinheit (13) und/oder Erfassungseinheit (14, 82) befestigt ist, insbesondere aufgeklebt, durch eine Schnapp- oder Klemmverbindung gehalten oder aufgekittet ist.

5. Lagemesseinrichtung nach einem der vorangehenden Ansprüche,
**dadurch gekennzeichnet, dass**
zwischen dem optischem Element (8, 20, 30, 81) und der ersten Sensoreinheit (13) eine Aufnahme mit einer Immersionsflüssigkeit angeordnet ist.

6. Lagemesseinrichtung nach einem der vorangehenden Ansprüche,
**dadurch gekennzeichnet, dass**
die erste Sensoreinheit (13, 44, 45) einen weiteren Empfangsbereich aufweist, der bezüglich der optischen Achse (OA) versetzt angeordnet ist.

7. Lagemesseinrichtung nach einem der vorangehenden Ansprüche,
**gekennzeichnet durch**
wenigstens eine zweite Sensoreinheit (44, 45) zur Erfassung einer **durch** diffraktive Codeelemente (40) erzeugten Lichtverteilung, wobei die zweite Sensoreinheit (44, 45) parallel oder schräg versetzt zur ersten Sensoreinheit (13) angeordnet ist.

8. Lagemesseinrichtung nach einem der vorangehenden Ansprüche,
**dadurch gekennzeichnet, dass**
wenigstens eine der Sensoreinheiten (13, 44, 45) ein lineares oder flächiges Sensorarray (91) aufweist.

9. Lagemesseinrichtung nach einem der vorangehenden Ansprüche,
**dadurch gekennzeichnet, dass**
eine dem Codeträger (6) zugewandte Oberfläche (35, 83, 84) des wenigstens einen Nachbarsegments (32, 85, 86) eine Beschichtung (37, 87, 88) aufweist.

10. Lagemesseinrichtung nach Anspruch 9,
**dadurch gekennzeichnet, dass**
die Beschichtung (37, 87, 88) spektral selektiv bezüglich Transmission, Absorption oder Reflektion ist.

11. Lagemesseinrichtung nach einem der vorangehenden Ansprüche,
**dadurch gekennzeichnet, dass**
zwischen dem Codeträger (6) und dem optischen Element (8) eine Blende (101) angeordnet ist.

12. Optoelektronisches Lagemessverfahren zum Bestimmen einer Lage einer ersten Sensoreinheit (13) gegenüber einem Codeträger (6) mit einem Positionscode (PC), insbesondere eines Winkels oder einer Länge, zur Verwendung mit einer Lagemesseinrichtung (1, 80, 100) gemäss einem der vorhergehenden Ansprüche 1 bis 11, mit einem
• Erzeugen einer von der Lage des Codeträgers (6) abhängigen Projektion zumindest eines Teiles des Positionscodes (PC), wobei das Erzeugen mindestens ein Emittieren von optischer Strahlung (3) auf den Codeträger (6) umfasst,
• Erfassen der Projektion durch wenigstens die erste Sensoreinheit (13) und
• Ableiten der Lage des Codeträgers (6) relativ zur ersten Sensoreinheit (13) aus der Projektion,
**dadurch gekennzeichnet, dass**
• parallel oder mit einem Einfallswinkel unterhalb eines Grenzwinkels α zu einer zwischen Codeträger und erster Sensoreinheit (13) definierten optischen Achse (OA) einfallende optische Strahlung (3) auf einen in der optischen Achse (OA) liegenden Empfangsbereich (12) der ersten Sensoreinheit (13) gelenkt wird und
• mit einem Einfallswinkel in einem Ablenkwinkelbereich oberhalb des Grenzwinkels α zu dieser optischen Achse (OA) einfallende optische Strahlung auf eine Stelle ausserhalb des Empfangsbereichs (12) abgelenkt wird.

13. Lagemessverfahren nach Anspruch 12,
**dadurch gekennzeichnet, dass**
mit der ersten Sensoreinheit (13) oder einer anderen Sensoreinheit (44, 45) ein durch diffraktive Codeelemente (40) des Positionscodes (PC) erzeugtes Lichtverteilungsmuster erfasst wird.

14. Lagemessverfahren nach einem der Ansprüche 12 oder 13,
**dadurch gekennzeichnet, dass**
mit der ersten Sensoreinheit (13) oder einer weiteren Sensoreinheit (44, 45) durch ein Nachbarsegment (9, 9', 11, 11', 22, 32, 33, 85, 86) fallende optische Strahlung (3) erfasst wird.

## Claims

1. Optoelectronic position measurement device, comprising
• a code carrier (6), which carries an optically detectable position code (PC),
• a radiation source (2) for emitting optical radiation (3) onto the code carrier (6),
• a detection unit (14, 82) having at least one first sensor unit (13), which has at least one light-sensitive receiving region (12) for receiving at least part of the radiation (3), as a result of which a scanning signal dependent on the position code (PC) can be generated and a position of the code carrier (6) relative to the first sensor unit (13) can thus be detected, and
• a refractive optical element (8, 20, 30, 81), which is arranged between the code carrier (6) and the first sensor unit (13) and has a focusing segment (10, 21, 31, 89) and at least one neighboring segment (9, 11, 22, 32, 33, 85, 86), wherein
- radiation (3) incident in the focusing segment (10, 21, 31, 89) in a parallel fashion or with an angle of incidence below a limit angle α with respect to the optical axis (OA) of the focusing segment (10, 21, 31, 89) can be directed by the focusing segment (10, 21, 31, 89) onto the receiving region (12) of the first sensor unit (13), said receiving region lying in the optical axis (OA), and
- radiation incident with an angle of incidence in a deflection angle range above the limit angle α with respect to the optical axis (OA) can be deflected by the focusing segment (10, 21, 31, 89) and the neighboring segment (9, 11, 22, 32, 33, 85, 86) onto a location outside the optical axis,
wherein the code carrier (6) is moveable relative to the first sensor unit (13) with one degree of freedom, more particularly rotationally or translationally,
**characterized in that**
the focusing segment (10, 21, 31, 89) and the neighboring segment (9, 11, 22, 32, 33, 85, 86) have curved surfaces (23, 24, 34-36, 83, 84) on the side facing the code carrier (6), wherein the radius (R1) of curvature of the surface (23, 24) of the focusing segment (10, 21, 31, 89) deviates from the radius (R2, R3) of curvature of the surface (24, 35, 36) of the at least one neighboring segment (9, 11, 22, 32, 33, 85, 86).

2. Position measurement device according to Claim 1,
characterized it that
the optical element (8, 30, 81) has two neighboring segments (9, 11, 9', 11', 32, 33, 85, 86) between which the central focusing segment (10, 10', 31, 89) is arranged.

3. Optoelectronic position measurement device, comprising
• a code carrier (6), which carries an optically detectable position code (PC),
• a radiation source (2) for emitting optical radiation (3) onto the code carrier (6),
• a detection unit (14) having at least one first sensor unit (13), which has at least one light-sensitive receiving region (12) for receiving at least part of the radiation (3), as a result of which a scanning signal dependent on the position code (PC) can be generated and a position of the code carrier (6) relative to the first sensor unit (13) can thus be detected, and
• a refractive optical element, which is arranged between the code carrier (6) and the first sensor unit (13) and has a focusing segment (10') and two neighboring segments (9', 11'), between which the central focusing segment (10') is arranged,
wherein
- radiation (3) incident in the focusing segment (10') in a parallel fashion or with an angle of incidence below a limit angle α with respect to the optical axis (OA) of the focusing segment (10') can be directed by the focusing segment (10') onto the receiving region (12) of the first sensor unit (13), said receiving region lying in the optical axis (OA), and
- radiation incident with an angle of incidence in a deflection angle range above the limit angle α with respect to the optical axis (OA) can be deflected by the focusing segment (10') and the neighboring segments (9', 11') onto a location outside the optical axis,
wherein the code carrier (6) is moveable relative to the first sensor unit (13) with one degree of freedom, more particularly rotationally or translationally,
**characterized in that**
the focusing segment (10') has a curved surface on the side facing the code carrier (6), and the neighboring segments (9', 11') have outwardly rising planar surfaces on the side facing the code carrier (6), such that the surfaces are inclined toward the optical axis.

4. Position measurement device according to any one of the preceding claims,
**characterized in that**
the optical element (8, 81) is fixed to the first sensor unit (13) and/or detection unit (14, 82), more particularly adhesively bonded thereon, held thereon by a snap-action or clamping connection, or cemented thereon.

5. Position measurement device according to any one of the preceding claims,
**characterized in that**
a receptacle with an immersion liquid is arranged between the optical element (8, 20, 30, 81) and the first sensor unit (13).

6. Position measurement device according to any one of the preceding claims,
**characterized in that**
the first sensor unit (13, 44, 45) has a further receiving region, which is arranged in a manner offset with respect to the optical axis (OA).

7. Position measurement device according to any one of the preceding claims,
**characterized by**
at least one second sensor unit (44, 45) for detecting a light distribution generated by diffractive code elements (40), wherein the second sensor unit (44, 45) is arranged parallel or in a manner obliquely offset with respect to the first sensor unit (13).

8. Position measurement device according to any one of the preceding claims,
**characterized in that**
at least one of the sensor units (13, 44, 45) has a linear or areal sensor array (91).

9. Position measurement device according to any one of the preceding claims,
**characterized in that**
a surface (35, 83, 84) of the at least one neighboring segment (32, 85, 86) that faces the code carrier (6) has a coating (37, 87, 88).

10. Position measurement device according to Claim 9,
**characterized in that**
the coating (37, 87, 88) is spectrally selective with regard to transmission, absorption or reflection.

11. Position measurement device according to any one of the preceding claims,
**characterized in that**
a diaphragm (101) is arranged between the code carrier (6) and the optical element (8).

12. Optoelectronic position measurement method for determining a position of a first sensor unit (13) with respect to a code carrier (6) having a position code (PC), more particularly an angle or a length, for use with a position measurement device (1, 80, 100) according to any one of the preceding Claims 1 to 11, comprising
• generating a projection - dependent on the position of the code carrier (6) - of at least one part of the position code (PC), wherein generating comprises at least emitting optical radiation (3) onto the code carrier (6),
• detecting the projection by means of at least the first sensor unit (13), and
• deriving the position of the code carrier (6) relative to the first sensor unit (13) from the projection,
**characterized in that**
• optical radiation (3) incident in a parallel fashion or with an angle of incidence below a limit angle α with respect to an optical axis (OA) defined between code carrier and first sensor unit (13) is directed onto a receiving region (12) of the first sensor unit (13), said receiving region lying in the optical axis (OA), and
• optical radiation incident with an angle of incidence in a deflection angle range above the limit angle α with respect to said optical axis (OA) is deflected onto a location outside the receiving region (12).

13. Position measurement method according to Claim 12,
**characterized in that**
a light distribution pattern generated by diffractive code elements (40) of the position code (PC) is detected by means of the first sensor unit (13) or some other sensor unit (44, 45).

14. Position measurement method according to either of Claims 12 and 13,
**characterized in that**
optical radiation (3) incident through a neighboring segment (9, 9', 11, 11', 22, 32, 33, 85, 86) is detected by means of the first sensor unit (13) or a further sensor unit (44, 45).

## Revendications

1. Dispositif optoélectronique de mesure de position comprenant :
• un support de code (6) qui porte un code de position (PC) pouvant être détecté de manière optique,
• une source de rayonnement (2) pour l'émission de rayonnement optique (3) sur le support de code (6),
• une unité de détection (14, 82) avec au moins une première unité de capteur (13) qui présente au moins un domaine de réception sensible à la lumière (12) pour la réception d'au moins une partie du rayonnement (3) si bien qu'un signal de balayage qui dépend du code de position (PC) peut être généré et qu'une position du support de code (6) peut ainsi être détectée par rapport à la première unité de capteur (13) et
• un élément optique réfractif (8, 20, 30, 81) qui est placé entre le support de code (6) et la première unité de capteur (13) et qui présente un segment de focalisation (10, 21, 31, 89) et au moins un segment adjacent (9, 11, 22, 32, 33, 85, 86),
- cependant que le rayonnement (3) incident par le segment de focalisation (10, 21, 31, 89) parallèlement ou avec un angle d'incidence inférieur à un angle limite α par rapport à l'axe optique (OA) du segment de focalisation (10, 21, 31, 89) dans le segment de focalisation (10, 21, 31, 89) peut être dirigé sur le domaine de réception (12), situé dans l'axe optique (OA), de la première unité de capteur (13) et
- le rayonnement incident par le segment de focalisation (10, 21, 31, 89) et le segment adjacent (9, 11, 22, 32, 33, 85, 86) avec un angle d'incidence dans un domaine d'angle de déviation supérieur à l'angle limite α par rapport à l'axe optique (OA) peut être dirigé sur un endroit à l'extérieur de l'axe optique,
le support de code (6) étant mobile par rapport à la première unité de capteur (13), en particulier par rotation ou par translation, avec un degré de liberté, **caractérisé en ce**
**que** le segment de focalisation (10, 21, 31, 89) et le segment adjacent (9, 11, 22, 32, 33, 85, 86) présentent, sur le côté tourné vers le support de code (6), des surfaces courbées (23, 24, 34-36, 83, 84), le rayon de courbure (R1) de la surface (23, 34) du segment de focalisation (10, 21, 31, 89) étant différent du rayon de courbure (R2, R3) de la surface (24, 35, 36) du segment adjacent qui existe au moins (9, 11, 22, 32, 33, 85, 86).

2. Dispositif de mesure de position selon la revendication 1,
**caractérisé en ce**
**que** l'élément optique (8, 30, 81) présente deux segments adjacents (9, 11, 9', 11', 32, 33, 85, 86) entre lesquels le segment de focalisation central (10, 10', 31, 89) est placé.

3. Dispositif optoélectronique de mesure de position comprenant :
• un support de code (6) qui porte un code de position (PC) pouvant être détecté de manière optique,
• une source de rayonnement (2) pour l'émission de rayonnement optique (3) sur le support de code (6),
• une unité de détection (14) avec au moins une première unité de capteur (13) qui présente au moins un domaine de réception sensible à la lumière (12) pour la réception d'au moins une partie du rayonnement (3) si bien qu'un signal de balayage qui dépend du code de position (PC) peut être généré et qu'une position du support de code (6) peut ainsi être détectée par rapport à la première unité de capteur (13) et
• un élément optique réfractif qui est placé entre le support de code (6) et la première unité de capteur (13) et qui présente un segment de focalisation (10') et deux segments adjacents (9', 11') entre lesquels le segment de focalisation central (10') est placé,
- cependant que le rayonnement (3) incident par le segment de focalisation (10') parallèlement ou avec un angle d'incidence inférieur à un angle limite α par rapport à l'axe optique (OA) du segment de focalisation (10') dans le segment de focalisation (10') peut être dirigé sur le domaine de réception (12), situé dans l'axe optique (OA), de la première unité de capteur (13) et
- le rayonnement incident par le segment de focalisation (10') et les segments adjacents (9', 11') avec un angle d'incidence dans un domaine d'angle de déviation supérieur à l'angle limite a par rapport à l'axe optique (OA) peut être dirigé sur un endroit à l'extérieur de l'axe optique,
le support de code (6) étant mobile par rapport à la première unité de capteur (13), en particulier par rotation ou par translation, avec un degré de liberté, **caractérisé en ce**
**que** le segment de focalisation (10') présente, sur le côté tourné vers le support de code (6), une surface courbée et les segments adjacents (9', 11') présentent, sur le côté tourné vers le support de code (6), des surfaces planaires montant vers l'extérieur si bien que les surfaces sont inclinées vers l'axe optique.

4. Dispositif de mesure de position selon l'une des revendications précédentes,
**caractérisé en ce**
**que** l'élément optique (8, 81) est fixé à la première unité de capteur (13) et/ou à l'unité de détection (14, 82), en particulier qu'il est collé dessus, maintenu par un assemblage par encliquetage ou par serrage ou qu'il est mastiqué dessus.

5. Dispositif de mesure de position selon l'une des revendications précédentes,
**caractérisé en ce**
**qu'**un logement avec un liquide d'immersion est placé entre l'élément optique (8, 20, 30, 81) et la première unité de capteur (13).

6. Dispositif de mesure de position selon l'une des revendications précédentes,
**caractérisé en ce**
**que** la première unité de capteur (13, 44, 45) présente un autre domaine de réception qui est placé décalé par rapport à l'axe optique (OA).

7. Dispositif de mesure de position selon l'une des revendications précédentes,
**caractérisé par**
au moins une seconde unité de capteur (44, 45) pour la détection d'une répartition de lumière générée par des éléments de code diffractifs (40), la seconde unité de capteur (44, 45) étant placée parallèlement ou décalée obliquement par rapport à la première unité de capteur (13).

8. Dispositif de mesure de position selon l'une des revendications précédentes,
**caractérisé en ce**
**qu'**au moins l'une des unités de capteur (13, 44, 45) présente un groupe de capteurs (91) linéaire ou en surface.

9. Dispositif de mesure de position selon l'une des revendications précédentes,
**caractérisé en ce**
**qu'**une surface (35, 83, 84) tournée vers le support de code (6) du segment adjacent qui existe au moins (32, 85, 86) présente une enduction (37, 87, 88).

10. Dispositif de mesure de position selon la revendication 9,
**caractérisé en ce**
**que** l'enduction (37, 87, 88) est sélective sur le plan spectral pour ce qui est de la transmission, de l'absorption ou de la réflexion.

11. Dispositif de mesure de position selon l'une des revendications précédentes,
**caractérisé en ce**
**qu'**un diaphragme (101) est placé entre le support de code (6) et l'élément optique (8).

12. Procédé de mesure de position optoélectronique pour déterminer une position d'une première unité de capteur (13) par rapport à un support de code (6) avec un code de position (PC), en particulier d'un angle ou d'une longueur, pour l'utilisation avec un dispositif de mesure de position (1, 80, 100) selon l'une des revendications précédentes 1 à 11 avec
• génération d'une projection dépendant de la position du support de code (6) d'au moins une partie du code de position (PC), la génération comprenant au moins une émission de rayonnement optique (3) sur le support de code (6),
• détection de la projection par au moins la première unité de capteur (13) et
• déduction de la position du support de code (6) par rapport à la première unité de capteur (13) à partir de la projection,
**caractérisé en ce que**
• le rayonnement optique incident (3) parallèlement ou avec un angle d'incidence inférieur à un angle limite α par rapport à un axe optique (OA) défini entre le support de code et la première unité de détection (13) est dirigé sur un domaine de réception (12) de la première unité de capteur (13) qui est situé dans l'axe optique (OA) et
• le rayonnement optique incident avec un angle d'incidence dans un domaine d'angle de déviation supérieur à l'angle limite α par rapport à cet axe optique (OA) est dévié sur un endroit à l'extérieur du domaine de réception (12).

13. Procédé de mesure de position selon la revendication 12,
**caractérisé en ce**
**qu'**un modèle de répartition de lumière généré par des éléments de code diffractifs (40) du code de position (PC) est détecté avec la première unité de capteur (13) ou avec une autre unité de capteur (44, 45).

14. Procédé de mesure de position selon l'une des revendications 12 ou 13,
**caractérisé en ce**
**que** le rayonnement optique (3) incident par un segment adjacent (9, 9', 11, 11', 22, 32, 33, 85, 86) est détecté par la première unité de capteur (13) ou par une autre unité de capteur (44, 45).
